# EUROPÄISCHE PATENTSCHRIFT

(11) **EP 3 357 199 B1**
(45) Veröffentlichungstag und Bekanntmachung des Hinweises auf die Patenterteilung: **25.12.2019**
(21) Anmeldenummer: 16777566.7
(22) Anmeldetag: 21.09.2016
(51) Int. Cl.: H04L 12/44, H04L 29/08

(54) **HEIMAUTOMATISIERUNGSSYSTEM**
HOME AUTOMATION SYSTEM
SYSTÈME DE DOMOTIQUE

(30) Priorität: 02.10.2015 DE 102015116756
(43) Veröffentlichungstag der Anmeldung: 08.08.2018
(73) Patentinhaber: INNOGY SE, 45128 Essen (DE)
(72) Erfinder: BECKER, Gernot, 44269 Dortmund (DE)
(74) Vertreter: Cohausz & Florack
(86) Internationale Anmeldenummer: PCT/EP2016/072372
(87) Internationale Veröffentlichungsnummer: WO 2017/055150

(56) Entgegenhaltungen:
- US-A1- 2014 237 064
- US-A1- 2015 091 757
- US-A1- 2015 201 305

## Beschreibung

Der Gegenstand betrifft ein Heimautomatisierungssystem, ein Verfahren zum Betreiben eines Heimautomatisierungssystems sowie eine Auswerteeinrichtung eines Heimautomatisierungssystems.

Heimautomatisierungslösungen werden zunehmen interessant für Privatanwender. Die Druckschrift US 2014/0237064 A1 beschreibt eine solche Lösung. Die in einer Heimautomatisierung verwendeten Komponenten sind hinlänglich bekannt, so dass bei der Entwicklung von Heimautomatisierungslösungen komfortable Bedienkonzepte in den Fokus rücken. Insbesondere wird es zunehmend wichtiger, die Position bzw. Anwesenheit eines Nutzers in dem von dem Heimautomatisierungssystem gesteuerten Haus genau und zuverlässig zu erkennen. Eine exakte Positionserkennung ermöglicht es, neuartige Bedienkonzepte zu implementieren.

Herkömmlicherweise wird eine Anwesenheitserkennung mittels passiver Infrarotmelder durchgeführt. Diese Infrarotmelder reagieren jedoch lediglich auf Bewegungen, so dass bei wenig Bewegung der Nutzer nicht sicher erkannt werden kann. Andere Verfahren, wie beispielsweise Ultraschallsensoren oder Mikrowellensensoren haben sich im Massenmarkt nicht durchgesetzt, weil sie eine Vielzahl von Sensoren benötigen, technisch komplex sind und somit kompliziert zu installieren. Außerdem können diese Sensoren nur eine Änderung im Raumgefüge detektieren, die auch von Positionsänderung von Gegenständen herrühren kann.

Die Aufgabe liegt nun darin, die Positionserkennung von Nutzern in Heimautomatisierungssystemen, insbesondere ohne Beeinflussung durch Gegenstände, unter Verwendung von bestehenden Technologien zu verbessern.

Diese Aufgabe wird durch ein System nach Anspruch 1, ein Verfahren nach Anspruch 14 sowie eine Auswerteeinrichtung nach Anspruch: 15 gelöst.

Es ist erkannt worden, dass mit Hilfe einer Auswerteeinrichtung Informationen von Sendern derart ausgewertet werden können, dass aus den Informationen der Sender Positionsinformationen abgeleitet werden können. Sender im Sinne dieser Anmeldung können Handsender sein, die energetisch eingespeist sind. Solche Sender können beispielsweise Nahfeldsender, beispielsweise NFC-Sender, RFID-Sender, WLAN-Sender, Bluetooth-Sender oder dergleichen sein. Solche Sender sind heutzutage schon in sogenannten Smartwatches als auch in sogenannten Smartphones eingebaut. Die Sender verfügen über eine Sendeeinrichtung, mit der die Sender zumindest eine Senderkennung aussenden können. Die Sender senden eine Senderkennung aus, sodass an jedem Empfänger feststellbar ist, von welchem Sender ein Signal stammt.

In der Regel basieren moderne Heimautomatisierungssysteme auf einem Funkprotokoll, bei dem Sensoren und Aktoren drahtlos miteinander kommunizieren. Sensoren und Aktoren eines Heimautomatisierungssystems sind beides Sensoren im Sinne des Gegenstands. Auch Aktoren sensieren auf der Luftschnittstelle Signale und sind daher Sensoren für Senderkennung.

Die drahtlose Kommunikation eines Heimautomatisierungssystems erfolgt in der Regel im gleichen Frequenzband, in dem die Sender ihre Senderkennung aussenden. Es ist nunmehr erkannt worden, dass mit Hilfe der ohnehin vorhandenen Sensoren des Heimautomatisierungssystems die Senderkennungen der verschiedenartigen Sender empfangen werden können. Insbesondere die fest installierten Sensoren und Aktoren eines Heimautomatisierungssystems lauschen auf der Luftschnittstelle nach Signalen für das Heimautomatisierungssystem. Insbesondere Steuermeldungen des Heimautomatisierungssystems werden über die Luftschnittstelle übertragen. Beim Lauschen auf der Luftschnittstelle können diese Sensoren und Aktoren auch als Sensoren zur Erkennung von Signalen von Sendern wie sie oben beschrieben wurden, dienen.

Jeder Sensor kann ein Empfangssignal eines Senders empfangen. Dieses Empfangssignal eines Senders ist insbesondere das Signal, mit dem der Sender seine Senderkennung ausgesendet hat. Beim Empfang dieses Signal lässt sich dessen Empfangsfeldstärke ermitteln. Hierzu geeignete Empfangschips sind bekannt. Die Empfangschips geben neben der empfangenen Senderkennung auch eine Information zu der Empfangsfeldstärke aus. Zusammen mit der Information, welcher Sensor dieses Signal empfangen hat, kann ein Empfangssignal erfasst werden. Jeder Sensor kann eine eindeutige Kennung besitzen, sodass stets nachvollziehbar ist, welcher Sensor welches Empfangssignal empfangen hat.

Die Sensoren übermitteln die aus zumindest der Empfangsfeldstärke, der Senderkennung und der Sensorkennung zusammengestellten Empfangsinformationen jeweils an eine Auswerteeinrichtung.

Die Auswerteeinrichtung kann die Empfangsinformationen von mehreren Sensoren auswerten. Bei der Auswertung können die verschiedenen Empfangsinformationen, welche jeweils von einem Sender stammen und von mehreren Sensoren in einem gleichen Sendezeitraum, in dem der Sender seine Kennung ausgesendet hat empfangen wurden, als Fingerabdruck des Senders verstanden werden. Da jede einzelne Empfangsfeldstärke in jedem Sensor gegebenenfalls unterschiedlich ist, und die Empfangsfeldstärke abhängig insbesondere von der Entfernung des Senders vom jeweiligen Sensor ist, kann aus den Empfangsinformationen verschiedener Sensoren eine für die Position des Senders typische Information als Fingerabdruck ermittelt werden. Ein solcher Fingerabdruck kann auch als aktuelle Signatur bezeichnet werden. Ein solcher Fingerabdruck kann auch als positionsvariable Signatur bezeichnet werden.

Somit ist es möglich, durch die Auswertung von verschiedenen Empfangsinformationen, die von verschiedenen Sensoren empfangen werden und einem einzelnen Sender zugeordnet werden können, die Position dieses Senders zu ermitteln und abhängig davon Handlungen oder Regeln im Heimautomatisierungssystem abzuleiten.

Wenn in diesem Dokument von Sensoren die Rede ist, sind dies nicht nur klassische Sensoren im Sinne eines Heimautomatisierungssystems, sondern stets umfasst sind alle Typen von Vorrichtungen, welche in das Heimautomatisierungssystem eingebunden sein können, insbesondere solche, die im klassischen Sinne als Sensoren und Aktoren eines Heimautomatisierungssystems verstanden werden, beispielsweise Taster, Schalter, Temperatursensoren, Helligkeitssensoren, Öffnungssensoren, Alarmgeber, Stellmotoren oder dergleichen.

Zur Auswertung der Position eines Senders kann es sinnvoll sein, die Empfangsinformationen nach Senderkennungen zu sortieren. Insofern wird vorgeschlagen, dass die Auswerteeinrichtung für jeweils einen Sender aus den Empfangsinformationen von zumindest zwei Sensoren die jeweiligen Empfangsfeldstärken und Sensorkennungen als aktuelle Signatur zu erfassen. Diese Erfassung der aktuellen Signatur wird vorzugsweise in der Auswerteeinrichtung durchgeführt. Jeder Sender sendet seine Senderkennung aus, welche von verschiedenen Sensoren empfangen wird. Dieses Empfangssignal hat eine charakteristische Empfangsfeldstärke. Zusammen mit der Information, von welchem Sensor die Empfangsinformation stammt, kann eine aktuelle Signatur erfasst werden. Die aktuelle Signatur kann ein Satz aus Sensorkennung und Empfangsfeldstärke von jeweils mehr als einem Sensor sein. Mit Hilfe dieser Signatur, die einen typischen Fingerabdruck für die Position des Senders darstellt, ist eine Positionserkennung des Senders innerhalb des Heimautomatisierungssystems möglich.

Um die Position des Senders einem örtlichen Bereich innerhalb des Heimautomatisierungssystems zuordnen zu können, ist ein Anlernprozess notwendig. Zunächst kennt das System nur die Signatur, kann diese jedoch noch keinem Ort zuweisen. Aus diesem Grunde wird vorgeschlagen, dass in einem Anlernprozess zumindest eine aktuelle Signatur als Positionssignatur einem örtlichen Bereich, insbesondere einem Raum, zugeordnet wird und diese Zuordnung gespeichert wird. Diese Zuordnung kann die Auswerteeinrichtung durchführen. Insbesondere kann der Nutzer während des Anlernens sich mit dem Sender bewegen und zu bestimmten Zeitpunkten festlegen, dass seine Position erkannt werden soll. Die dann erfasste aktuelle Signatur weist der Nutzer einem Raum zu, indem er beispielsweise auf einem mobilen Endgerät, einem Tablet, Smartphone oder dergleichen, seine aktuelle tatsächliche Position angibt bzw. angibt, welchem Raum er die aktuelle Signatur zuordnen möchte. Diese Zuordnung wird als Positionssignatur gespeichert.

Zur genauen Positionierung ist es relevant, dass ein möglichst großer Datensatz für die Positionssignatur verwendet wird, das heißt möglichst viele Referenzpunkte bekannt sind. Insofern ist es vorgeschlagen, dass ein Satz aus Empfangsfeldstärke und jeweiliger Sensorkennung von zumindest zwei Sensoren, vorzugsweise mehr als zwei Sensoren, insbesondere einer Vielzahl an Sensoren als Positionssignatur gespeichert ist. Eine Positionssignatur kann somit von verschiedenen Sensoren die jeweilig empfangene Empfangsfeldstärke enthalten und in einem Datensatz abgespeichert werden.

Ein Raum bzw. ein örtlicher Bereich muss nicht nur eine einzige Position beinhalten, sondern kann auch eine gewisse Ausbreitung haben. Um dieser Tatsache gerecht zu werden, ist es sinnvoll, mehrere aktuelle Signaturen als Positionssignaturen einem gleichen örtlichen Bereich zuzuordnen. Das heißt, dass für jeweils einen örtlichen Bereich eine Matrix aus mehreren Positionssignaturen abgespeichert werden kann. Für eine genaue Positionsermittlung ist es dann möglich, die jeweils aktuelle Signatur mit den Positionssignaturen der Matrizen abzugleichen und abhängig von einer bestimmten Regel, welche nachfolgend noch beschrieben wird, herzuleiten, in welchem Raum bzw. welchem örtlichen Bereich sich der Sender befindet.

Gemäß einem Ausführungsbeispiel wird zur Positionserkennung eines Senders vorgeschlagen, dass die Auswerteeinrichtung aus den Empfangsinformationen für einen Sender eine aktuelle Signatur erfasst und die aktuelle Signatur mit zumindest zwei Positionssignaturen vergleicht. Nach dem Anlernprozess ist für zumindest einen räumlichen Bereich, vorzugsweise für zumindest zwei oder mehr räumliche Bereiche, jeweils zumindest eine Positionssignatur, vorzugsweise ein Satz aus mehreren Positionssignaturen abgespeichert. Wird nun eine aktuelle Signatur empfangen, kann sie mit den abgespeicherten Positionssignaturen verglichen werden. Insbesondere kann dann die Positionssignatur gesucht werden, welche die geringste Abweichung von der aktuellen Signatur hat, insbesondere bei der die Feldstärken der einzelnen Sensoren der aktuellen Signatur in Summe oder in Mittel am geringsten von den Feldstärken einer der Positionssignaturen abweichen. Ist diese Positionssignatur ermittelt worden, kann der dieser Positionssignatur zugeordnete örtliche Bereich ermittelt werden und festgelegt werden, dass der Sender sich in diesem örtlichen Bereich befindet.

Sind für einen örtlichen Bereich mehrere Positionssignaturen gespeichert, so kann es sinnvoll sein, einen mittleren Differenzbetrag, vorzugsweise ein arithmetisches Mittel der Differenzbeträge der aktuellen Signatur von allen Positionssignaturen die einem örtlichen Bereich zugeordnet sind, zu ermitteln. Dieser Mittelwert wird dann mit den Mittelwerten der Abweichung von den Positionssignaturen der anderen örtlichen Bereiche verglichen und der Wert mit der kleinsten Abweichung bestimmt den örtlichen Bereich, der dem Sender zugeordnet wird.

Gemäß einem Ausführungsbeispiel wird vorgeschlagen, dass für einen Vergleich die Auswerteeinrichtung aus den Empfangsinformationen zunächst diejenigen Empfangsinformationen selektiert, die einem Sender zuzuordnen sind.

Es ist denkbar, dass verschiedene Sender im Heimautomatisierungssystem gleichzeitig aktiv sind und ihre Senderkennungen aussenden. Um für jeden Sender jeweils eine eigene Positionsbestimmung durchzuführen ist es sinnvoll, zunächst aus den Empfangsinformationen diejenigen zu selektieren, die von ein und demselben Sender stammen. Hierzu kann in der Auswerteeinrichtung zunächst überprüft werden, welche Senderkennung eine Empfangsinformation hat und die Empfangsinformation mit der gleichen Senderkennung können für eine aktuelle Signatur verwendet werden.

Wie bereits erwähnt, kann die aktuelle Signatur eines jeweiligen Senders mit Positionssignaturen verglichen werden. Hierbei können die Werte für die Feldstärke des Empfangsfeldes der Senderkennung jeweils verglichen werden und eine Summe der Differenzbeträge für jeden Vergleich erstellt werden. Derjenige Differenzbetrag, welcher geringer ist, gehört zu der Positionssignatur, die dem örtlichen Bereich zugeordnet ist, in welchem der Sender sich befindet.

Gemäß einem Ausführungsbeispiel wird vorgeschlagen, dass der kleinste Differenzbetrag zwischen aktueller Signatur und zumindest zwei Sätzen von Positionssignaturen ermittelt wird. Der Sender wird dem örtlichen Bereich zugeordnet, bei dessen Satz an Positionssignaturen der kleinste Differenzbetrag ermittelt wurde.

Während des Betriebs können weitere Positionssignaturen geschaffen werden. Dies ist beispielsweise möglich, in dem aktuelle Signaturen stets dann zu Positionssignaturen für einen bestimmten örtlichen Bereich umgewandelt werden, wenn die Position des Senders bekannt ist. Dies kann beispielsweise dann der Fall sein, wenn ein Nutzer einen Sender bei sich trägt und einen Schalter des Heimautomatisierungssystems bedient. In dem Moment ist bekannt, in welchem Raum der Schalter ist. Zum Zeitpunkt der Bedienung wird die aktuelle Signatur des Senders erfasst und als Positionssignatur dem Raum zugeordnet, in dem sich der Schalter befindet. Durch ein iteratives Anpassen bzw. Erweitern der Positionssignaturen für die jeweiligen örtlichen Bereiche kann die Genauigkeit der Positionserkennung verbessert werden.

Gemäß einem Ausführungsbeispiel wird vorgeschlagen, dass die Auswerteeinrichtung als Teil eines Sensors oder als von einem Sensor getrennte Einrichtung innerhalb des Heimautomatisierungssystems gebildet ist. Die Auswerteeinrichtung kann somit als getrennter Teil bzw. getrennte Einrichtung des Heimautomatisierungssystems zur Verfügung gestellt sein oder integraler Bestandteil sein. Insbesondere in einem Sensor oder Aktor des Heimautomatisierungssystems kann die Auswerteeinrichtung angeordnet sein.

Die Auswertung der Signaturen kann durch den Einsatz eines neuronalen Netzes erfolgen. Dies ist bereits eigenständig erfinderisch und kann mit allen hier beschriebenen Merkmalen kombiniert werden. Das neuronale Netz lernt die vom Benutzer angegebenen Eingangspositionen und wird während der Benutzung des Systems und insbesondere auch durch von dem Nutzer angebrachten Korrekturen weiter angelernt. Das neuronale Netz wird mit der Zeit immer zuverlässiger und besser. Insbesondere könnte ein sogenanntes Kohonen Netz eingesetzt werden. Diese kann die Positionen des Benutzers als Reiz und die Ausgabewerte als Trigger darstellen.

Gemäß einem Ausführungsbeispiel wird vorgeschlagen, dass die Sensoren ortsfest in dem Heimautomatisierungssystem eingebunden sind und/oder dass der Sender ein mobiler, vorzugsweise energetisch eigengespeister Sender ist. In dem Heimautomatisierungssystem sind verschiedenartige Sensoren und Aktoren ortsfest eingebunden. Diese können als Sensoren für die gegenständliche Positionsermittlung verwendet werden.

Ein energetisch eigengespeister Sender kann derart verstanden werden, dass dieser sich beispielsweise aus einer Batterie speist. Wie erwähnt, senden die Sensoren als auch der Sender auf einer gleichen Trägerfrequenz, insbesondere auf 868 MHz.

Abhängig von dem dem Sender anhand der aktuellen Signatur zugeordnetem örtlichen Bereich erstellt die Auswerteeinrichtung ein Steuerungstelegramm für einen Aktor des Heimautomatisierungssystems. Hierbei ist es möglich, dass nach bestimmten Regeln, abhängig von der Positionserkennung, Steuerungstelegramme erstellt werden. Eine Positionserkennung kann, auch unabhängig von dem oben beschriebenen, in dem Heimautomatisierungssystem etabliert sein. Sobald eine Position des Senders bekannt ist, kann einer Position eine Regel zugeordnet werden und abhängig von dieser Regel kann das Steuerungstelegramm für ein aktuelles Heimautomatisierungssystem erstellt werden.

Gemäß einem Ausführungsbeispiel wird vorgeschlagen, dass ein Sender seine Senderkennung in festgelegten Intervallen aussendet. Das bedeutet, dass der Sender nicht ständig Senderkennungen aussendet sondern dies nur zu bestimmten Zeiten tut. Hierdurch wird vermieden, dass der Sender, insbesondere wenn er energetisch eigengespeist ist, zu schnell seine elektrisch gespeicherte Energie aufbraucht. Dies erhöht die Lebensdauer des Senders.

Gemäß einem Ausführungsbeispiel wird vorgeschlagen, dass die Auswerteeinrichtung die Intervalle erfasst. Sobald in der Auswerteeinrichtung bekannt ist, in welchen Intervallen der Sender seine Senderkennung aussendet und wenn die Zeit zwischen Sender und Heimautomatisierungssystem synchronisiert ist, ist es möglich, abhängig von den Intervallen die Sensoren zum Empfangen von Empfangsinformationen zu aktivieren. Das heißt, dass die Sensoren nur dann auf der Luftschnittstelle lauschen, wenn zu erwarten ist, dass der Sender ein Empfangssignal aussendet. Die Auswerteeinrichtung kann die Sensoren entsprechend anweisen und über die Intervalle informieren.

Auch ist es möglich, dass die Empfangsintervalle bzw. Empfangszeiten der Sensoren des Heimautomatisierungssystems bekannt sind und die Auswerteeinrichtung diese Informationen dem Sender zur Verfügung stellt. In diesem Fall kann der Sender dann abhängig von der Empfangsfähigkeit des Heimautomatisierungssystems, also zu den Zeiten, zu denen die Sensoren ohnehin auf der Luftschnittstelle lauschen, seine Senderkennung aussenden.

Gemäß einem Ausführungsbeispiel wird vorgeschlagen, dass die Auswerteeinrichtung abhängig von einer vorhergehenden Bestimmung des örtlichen Bereichs eines Senders eine Auswahl von Sensoren aktiviert. Es ist erkannt worden, dass nicht stets alle Sensoren des Heimautomatisierungssystems die Senderkennung empfangen müssen. Vielmehr ist, wenn einmal die Position des Senders erkannt wurde, davon auszugehen, dass dieser sich linear in dem Raum bewegt und somit nur in angrenzenden Bereichen zu der aktuellen Position durch die dort angeordneten Sensoren gelauscht werden muss. Hierdurch wird Energie bei den Sensoren eingespart, die weit entfernt von der aktuellen Position des Senders sind, da diese in dem Fall nicht lauschen müssen. Auch kann diese lineare Änderung wieder von dem neuronalen Netz interpretiert werden, welches wiederum die Vorhersage für vorbekannte, angelernte Benutzerverhalten interpoliert und daraus programmierte Aktionen ableiten kann.

Das Bewegungsprofil des Senders kann auch einen Gradienten umfassen, das heißt, dass seine Geschwindigkeit im Raum als Positionsveränderung pro Zeiteinheit bewertet wird. Abhängig von diesem Gradienten kann eine Auswahl der Sensoren erfolgen, die aktiviert werden, um die Senderkennung zu empfangen. Je schneller sich ein Sender bewegt, desto größer kann der Bereich sein, der um den aktuellen örtlichen Bereich gespannt ist, in dem die Sensoren aktiviert werden.

Ferner kann ein Sender zumindest ein Bedienelement haben, dem Bedienelement innerhalb des Heimautomatisierungssystems zumindest eine Funktion zugeordnet sein, und die zugeordnete Funktion abhängig von der Bestimmung des örtlichen Bereiches eines Senders sein. Unabhängig von der oben beschriebenen Positionserkennung ist es möglich, dass ein Sender, beispielsweise ein Handsender, ein Smartphone, ein Tablet oder dergleichen in dem Heimautomatisierungssystem seine Senderkennung aussendet und/oder in dem Heimautomatisierungssystem eingebunden ist. In diesem Sender kann beispielsweise ein Bedienelement vorhanden sein, welches für eine bestimmte Funktion innerhalb eines Raumes gedacht ist. Dies kann beispielsweise das Einschalten der Deckenbeleuchtung sein. Somit kann eine generische Funktion einem stets selben Bedienelement zugeordnet sein. Ist die Position des Senders bekannt, so kann die generische Funktion abhängig der Position durchgeführt werden, in dem aus der generischen Funktion eine für die aktuelle Position gültige Funktion abgeleitet wird.

In einem Beispiel kann dies bedeuten, dass die generische Funktion "Deckenbeleuchtung", wenn die erkannte Position in einem ersten Raum ist, in die Funktion "Einschalten der Deckenleuchte in dem ersten Raum" umgewandelt wird. Wenn die Position in einem zweiten Raum erkannt wird, wird die generische Funktion in die Funktion "Einschalten der Deckenleuchte in dem zweiten Raum" umgewandelt.

In diesem Zusammenhang sei erwähnt, dass der Sender mit dem Bedienelement nicht zwangsläufig zusammenfallen muss mit dem Sender, welcher die Senderkennung aussendet. Vielmehr können die Sender auch auseinanderfallen und baulich getrennte Einheiten sein.

Gemäß einem Ausführungsbeispiel wird vorgeschlagen, dass der Sender zumindest ein Bedienelement hat, dass dem Bedienelement innerhalb des Heimautomatisierungssystems zumindest eine Funktion zugeordnet ist und dass die zugeordnete Funktion jeweils an dem Aktor ausgeführt wird, welcher dem bestimmten örtlichen Bereich eines Sensors zugeordnet ist. Auch hier können die Sender auseinanderfallen.

Ein weiterer Aspekt ist ein Verfahren zum Betreiben eines Heimautomatisierungssystems, insbesondere nach einem der vorangehenden Ansprüche, bei dem von zumindest zwei Sensoren ein Empfangssignal zumindest eines Senders empfangen, aus dem Empfangssignal eines Senders eine jeweilige Empfangsfeldstärke zusammen mit einer Senderkennung und einer Senderkennung als Empfangsinformation erfasst wird und die Empfangsinformation ausgewertet wird. Durch die Auswertung der Empfangsinformation, insbesondere der Empfangsfeldstärke und der Sensorkennung ist eine eindeutige Signatur vorhanden, welche einem örtlichen Bereich zugeordnet werden kann. Hierzu können Vergleichssignaturen, sogenannte Positionssignaturen, vorgesehen sein, mit denen die aktuelle Signatur verglichen wird.

Ein weiterer Aspekt ist eine Auswerteeinrichtung eines Heimautomatisierungssystems umfassend Empfangsmittel eingerichtet zum Empfangen von Empfangssignalen von zumindest zwei Sensoren, Auswertemittel eingerichtet zum Extrahieren einer jeweiligen Empfangsfeldstärke zusammen mit einer Senderkennung und einer Sensorkennung als aktuelle Signatur aus zumindest zwei Empfangssignalen eines Senders und Zuordnungsmittel zum Zuordnen einer aktuellen Signatur zu einem örtlichen Bereich und zum Speichern dieser Zuordnung als Positionssignatur.

Die zuvor genannten Verfahren können auch als Computerprogramm oder als auf einem Speichermedium gespeichertes Computerprogramm realisiert werden. Hierbei kann ein Mikroprozessor zur Durchführung der jeweiligen Verfahrensschritte durch ein Computerprogramm geeignet programmiert sein.

Nachfolgend wird der Gegenstand anhand einer Ausführungsbeispiele zeigenden Zeichnung näher erläutert. In der Zeichnung zeigen:
- Fig. 1: eine schematische Ansicht eines Systems mit Sensoren und einer Auswerteeinrichtung;
- Fig. 2: eine schematische Ansicht eines Systems mit einem Sender und mehreren Sensoren;
- Fig. 3: eine schematische Ansicht einer Empfangsinformation;
- Fig. 4: eine schematische Ansicht einer Matrix mit Positionssignaturen;
- Fig. 5: eine schematische Ansicht eines Vergleichs einer aktuellen Signatur mit Positionssignaturen;
- Fig. 6: eine schematische Ansicht eines Handsenders und der Anwendung dieses in einem Heimautomatisierungssystem;
- Fig. 7: eine schematische Ansicht von Sende- und Empfangsintervallen.

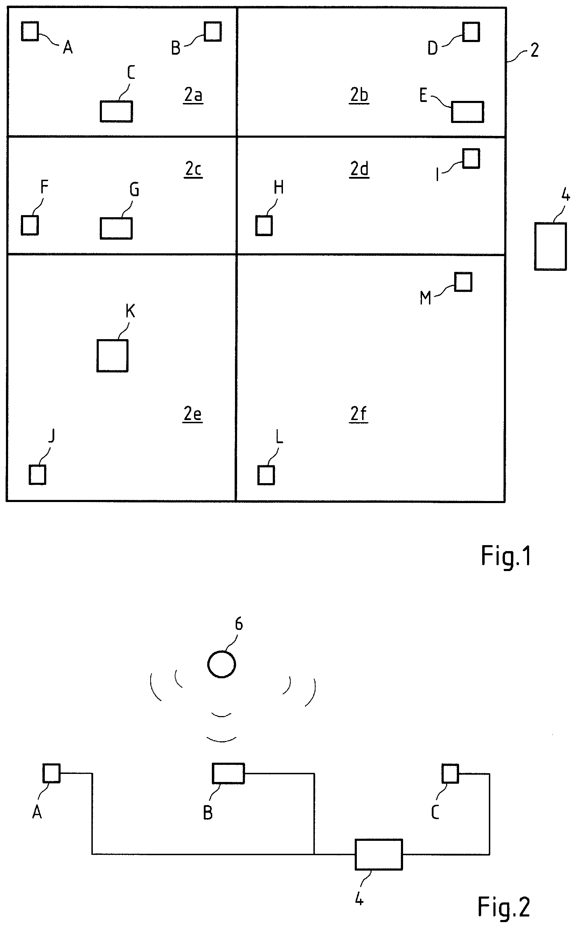

Fig. 1 zeigt einen Bereich 2, in dem ein Heimautomatisierungssystem etabliert ist. Der Bereich 2 ist in sechs räumliche Bereiche 2a-f unterteilt. Die räumlichen Bereiche 2a-f können beispielsweise unterschiedliche Räume in einem Gebäude sein oder auch bestimmte Bereiche innerhalb eines Raumes. In jedem der räumlichen Bereiche 2a-f ist zumindest einer der Sensors A-M des Heimautomatisierungssystems installiert.

In dem in Fig. 1 gezeigten Beispiel sind in dem Bereich 2a beispielsweise die Sensoren A, B und C installiert, in dem Bereich 2b sind die Sensoren D und E installiert, in dem Bereich 2c sind die Sensoren F und G installiert, in dem Bereich 2d sind die Sensoren H und I installiert, in dem Bereich 2e sind die Sensoren J und K installiert und in dem Bereich 2f sind die Sensoren L und M installiert.

Neben den Sensoren A-M ist eine Auswerteeinrichtung 4 vorgesehen, welche drahtlos oder drahtgebunden in Kommunikation mit den Sensoren A-M steht.

Die Sensoren A-M können verschiedenste Sensoren oder Aktoren eines Heimautomatisierungssystems sein. So sind beispielsweise Raumthermostate, Bewegungsmelder, Feuermelder, Taster, Schalter, Schaltaktoren, Dimmaktoren, Binäreingänge, Rolladensteuerung, Lüftungssteuerung, Klimaanlagesteuerung, Kameras oder dergleichen denkbare Sensoren A bis M im Sinne des Gegenstandes. Die Sensoren A-M haben gemeinsam, dass sie in einem gemeinsamen Funkband miteinander kommunizieren können und somit Teil des Heimautomatisierungssystems sind. Ebenfalls Teil des Heimautomatisierungssystems kann die Auswerteeinrichtung 4 sein, die auch in einem der Sensoren A bis M integriert sein kann.

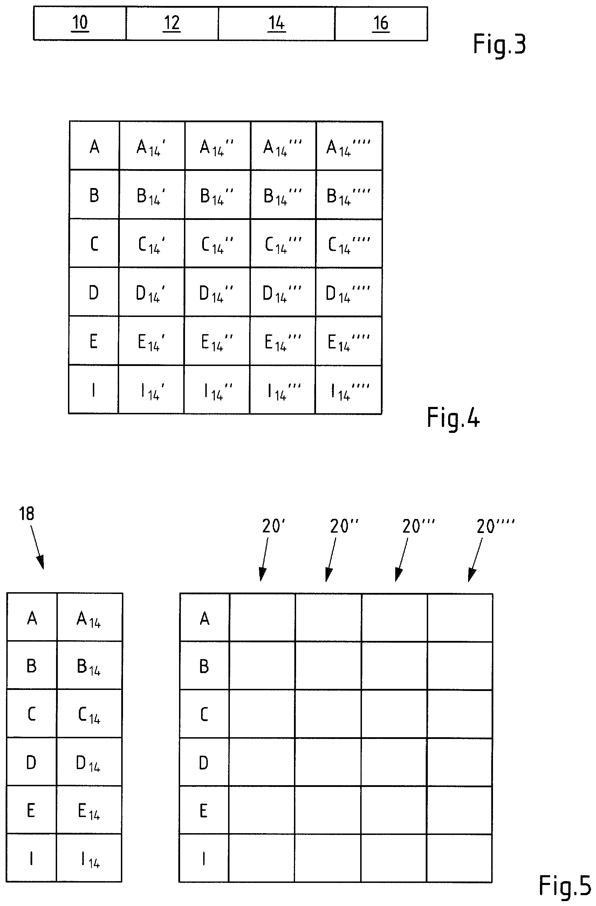

Ein Sender 6, beispielsweise ein Telefon, eine Uhr, ein Funkchip oder dergleichen kann in dem Bereich 2 genutzt werden und sich dabei frei in dem Bereich 2 bewegen. Der Sender 6 sendet auf der gleichen Frequenz, wie die Sensoren A-M, was in Fig. 2 dargestellt ist. In Intervallen sendet der Sender 6 seine Senderkennung aus, die beispielsweise eine eineindeutige Zeichenfolge ist. Jeder der Sensoren A-M in Fig. 2, gezeigt sind nur die Sensoren A-C, kann grundsätzlich diese Senderkennung empfangen, wenn die Feldstärke der Senderkennung am Sensor groß genug ist. Die Sensoren A-C sind drahtlos oder drahtgebunden mit der Auswertungseinrichtung 4 verbunden. Je nach Entfernung und sonstiger räumlicher Beziehung zwischen dem Sender 6 und den Sensoren A-M kann die Feldstärke des vom Sender 6 in einem der Sensoren A-C empfangenen Signals variieren. Die Sensoren A-C werten nicht nur die empfangene Senderkennung sondern auch die Feldstärke aus. Die von den Sensoren A-C empfangenen Senderinformationen werden in Empfangssituationen umgewandelt, wie sie in Fig. 3 als Datensatz dargestellt sind.

In Fig. 3 ist eine Empfangsinformation 8 als Datensatz dargestellt. In der Empfangsinformation 8 enthalten ist eine Senderkennung 10 des Senders 6, eine Sensoren Kennung 12 eines der Sensoren A-M sowie eine Information über die Empfangsfeldstärke 14 des Signals mit dem die Senderkennung empfangen wurde sowie weitere Prüfdaten oder dergleichen 16.

Die Senderkennung 10 kann eine eineindeutige Zeichenfolge sein, die einen jeden Sender 6 eindeutig identifiziert.

Die Sensorkennung 12 kann eine eineindeutige Zeichenfolge sein, die jeden Sensor AM eindeutig identifiziert.

Die Empfangsfeldstärke 14 kann eine Information darüber sein, wie groß das elektrische Feld des Signals mit dem die Senderkennung im Sensor A-C empfangen wurde war. Dies kann beispielsweise eine Betragsangabe sein. Diese drei Daten 10, 12,14 zusammen mit Prüfdaten 16, beispielsweise CRC-Prüfdaten, können von den Sensoren A-M jeweils an die Auswerteeinrichtung 4 übermittelt werden.

Zu jedem Zeitpunkt, zu dem ein Sender 6 seine Senderkennung 10 aussendet, erstellt jeder Sensor A-M, der die Senderkennung 10 empfängt, eine Empfangsinformation 8, wie sie in Fig. 3 dargestellt ist.

In der Auswerteeinrichtung 4 wird für jeden einzelnen Sender 6 unter Verwendung der Senderkennung 10 die Information 12 zum Sensor A-M und die Empfangsfeldstärke 14 extrahiert. Die Information 12 von zumindest zwei Sensoren A-M hinsichtlich der Empfangsfeldstärke kann als aktuelle Signatur verstanden werden.

In einem Anlernprozess wird zumindest eine aktuelle Signatur, werden vorzugsweise mehrere aktuelle Signaturen einem räumlichen Bereich 2a-f zugeordnet, so dass eine Matrix aus Positionssignaturen gebildet werden kann, wie dies in Fig. 4 dargestellt ist.

Fig. 4 zeigt beispielsweise eine Positionssignatur, welche dem räumlichen Bereich 2b zugewiesen ist. Zu erkennen ist, dass von den Sensoren A, B, C, D, E und I jeweils ein Satz von Empfangsfeldstärken A14', B14', C14', D14', E14'und 114' gespeichert werden. Diese Informationen werden dem räumlichen Bereich 2b zugeordnet. Das heißt, die Matrix, wie sie in Fig. 4 dargestellt ist, die sich aus verschiedenen aktuellen Signaturen zusammensetzt, wird dem räumlichen Bereich 2b zugeordnet, so dass die Signaturen Positionssignaturen werden. Die Information 14 zu den Empfangsfeldstärken, die in der Matrix gemäß Fig. 4 gespeichert sind, repräsentieren ggf. auch leicht unterschiedliche Positionen des Senders 6 innerhalb des räumlichen Bereichs 2b, welche im Anlernprozess erfasst wurden.

Im Anlernprozess wird vorzugsweise für jeden räumlichen Bereich 2a-f zumindest eine Positionssignatur, was zumindest einer Spalte der Matrix nach Fig. 4 entspricht, erfasst, vorzugsweise jedoch mehrere Positionssignaturen in einer Matrix gemäß Fig. 4.

Während des Betriebs wird die Positionsdetektion dann so durchgeführt, dass eine aktuelle Signatur 18, wie in Fig. 5 angedeutet, erfasst wird, in der die Informationen 12 zu den jeweiligen Sensoren A-I sowie die entsprechenden Informationen 14 (A14 bis 114) zu den Empfangsfeldstärken enthalten sind.

Bei der Erfassung der aktuellen Signatur kann eine Mengenbeschränkung vorliegen, so dass beispielsweise lediglich diejenigen Sensoren A-M bzw. deren Empfangsinformationen berücksichtigt werden, bei denen die Empfangsfeldstärken A14-I14 am größten sind, also die Sensoren A-M mit den stärksten Empfangsfeldstärken des Signals der Senderkennung 10.

Anschließend wird die aktuelle Signatur mit den einzelnen Positionssignaturen 20', 20", 20"', 20"" in der Matrix gemäß Fig. 4 verglichen, wobei der Wert der Empfangsfeldstärke jeweils für jeden einzelnen Sensor verglichen wird und eine Summe der Differenzbeträge bestimmt wird. Für jede Positionssignatur 20' wird eine Summe der Differenzbeträge zwischen den jeweiligen gespeicherten Empfangsfeldstärken und den Empfangsfeldstärken der aktuellen Signatur 18 errechnet. Anschließend kann ein Mittelwert für die Summe der Differenzbeträge über alle Positionssignaturen 20'-20"" errechnet werden. Dies wird für alle Matrizen durchgeführt, das heißt für jeden der Räume 2a-f existiert eine Matrix gemäß Fig. 4 und der Vergleich gemäß Fig. 5 wird für jeden Raum durchgeführt.

Anschließend wird ermittelt, welcher Differenzbetrag am kleinsten ist und die aktuelle Signatur 18 wird dem Raum zugeordnet, dem auch die entsprechende Matrix mit dem kleinsten Differenzbetrag zugeordnet ist. Im vorliegenden Beispiel könnte dies beispielsweise der räumliche Bereich 2b sein.

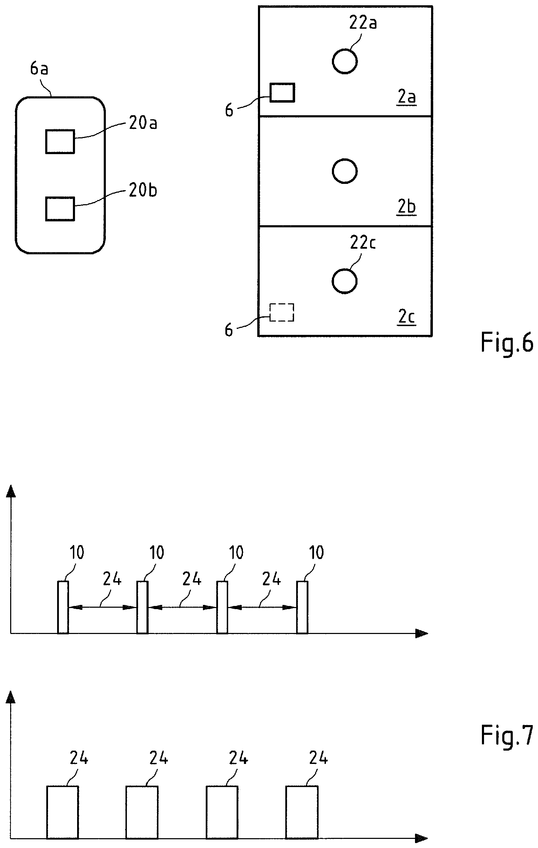

Fig. 6 zeigt ein Anwendungsbeispiel der Positionserkennung. Ein Sender 6 kann dabei nacheinander in verschiedenen räumlichen Bereichen 2a, b, c anwesend sein. Dieser Sender 6 kann beispielsweise ein mobiler Handsender 6a oder von diesem mobilen Handsender ein getrenntes Bauteil sein. Auf dem Handsender 6a sind Bedienelemente 20a, 20b vorgesehen. Mit den Bedienelementen 20a, 20b ist es beispielsweise möglich, bestimmte Funktionen des Heimautomatisierungssystems anzusteuern. So kann beispielsweise das Bedienelement 20a so programmiert sein, dass stets eine, wenn vorhandene, Deckenbeleuchtung eines räumlichen Bereichs 2a-c aktiviert wird. Der mobile Sender 6a wird nun in den räumlichen Bereichen 2a-f bewegt und es wird zunächst beispielsweise erkannt, dass der mobile Sender 6a in dem räumlichen Bereich 2a ist. Wird in diesem Moment das Bedienelement 20a gedrückt, so wird abhängig von der erkannten Position im räumlichen Bereich 2a beispielsweise die Deckenleuchte 22a ein- bzw. ausgeschaltet.

Bewegt sich der Sender 6a dann jedoch in den Raum 2c und wird dies erkannt und wird erneut das Bedienelement 20a betätigt, so wird nicht mehr die Leuchte 22a geschaltet sondern nunmehr die Leuchte 22c.

Somit wird ein und demselben Bedienelement 20a eine generische Funktion zugeordnet, welche jedoch abhängig vom erkannten räumlichen Bereich einer bestimmten Aktionen bzw. bestimmten Aktor zugeordnet wird.

Fig. 7 zeigt den zeitlichen Verlauf des Sendens einer Senderkennung 10 in Intervallen 24 durch den Sender 6. Die Intervalldauer der Intervalle 24 kann durch die Auswerteeinrichtung 4 erfasst werden und entsprechend der Intervalldauer kann eine Aktivierung der Sensoren A-M so erfolgen, dass diese zu bestimmten Zeiten lauschen, wobei diese Zeiten mit den Sendezeitpunkten der Senderkennung 10 übereinstimmen.

Anders herum ist es auch möglich, dass die Zeiten, zu denen die Sensoren A-M lauschen, bekannt sind und abhängig hiervon von der Auswerteeinrichtung 4 der Sender 6 instruiert wird, die Intervallbreite 24 entsprechend einzustellen um dann entsprechend die Senderkennung 10 nur dann auszusenden, wenn die Sensoren A-M ohnehin lauschen. Beides führt zur Reduktion des Stromverbrauchs entweder im Sender 6 oder in den Sensoren A-M.

Mit Hilfe der gezeigten Auswerteeinrichtung ist es möglich, eine komfortable Bedienung eines Heimautomatisierungssystems durch Positionserkennung zu ermöglichen.

## Patentansprüche

1. Heimautomatisierungssystem umfassend,
- zumindest zwei: Sensoren (A-M),
- zumindest eine Auswerteeinrichtung (4),
- wobei die Sensoren dazu eingerichtet sind, aus einem Empfangssignal eines Senders (6) eine jeweilige Empfangsfeldstärke (14) zusammen mit einer Senderkennung (10) und einer Sensorkennung (12) als Empfangsinformationen (8) zu erfassen,
- wobei die Sensoren (A-M) dazu eingerichtet sind, die Empfangsinformationen (8) an die Auswerteeinrichtung (4) zu übertragen und
- wobei die Auswerteeinrichtung (4) dazu eingerichtet ist, die Empfangsinformationen (8) auszuwerten, aus den Empfangsinformationen (8) eine aktuelle Signatur zu erstellen und abhängig von dem dem Sender der aktuellen Signatur zugeordneten örtlichen Bereich (2a-f) ein Steuerungstelegramm für einen Aktor des Heimautomatisierungssystems zu erstellen.

2. Heimautomatisierungssystem nach Anspruch 1,
**dadurch gekennzeichnet,**
- **dass** die Auswerteeinrichtung für jeweils einen Sender aus den Empfangsinformationen von zumindest zwei Sensoren die jeweiligen Empfangsfeldstärken und Sensorkennungen als aktuelle Signatur erfasst und/oder
- **dass** die Auswerteeinrichtung in einem Anlernprozess zumindest eine aktuelle Signatur als Positionssignatur einem örtlichen Bereich, insbesondere einem Raum zuordnet und dass diese Zuordnung gespeichert ist.

3. Heimautomatisierungssystem nach einem der vorangehenden Ansprüche,
**dadurch gekennzeichnet,**
- **dass** ein Satz aus Empfangsfeldstärke und jeweiliger Sensorkennung von zumindest zwei Sensoren als Positionssignatur gespeichert ist.

4. Heimautomatisierungssystem nach einem der vorangehenden Ansprüche,
**dadurch gekennzeichnet,**
- **dass** in der Auswerteeinrichtung eine Mehrzahl von aktuellen Signaturen als Positionssignaturen einem gleichen örtlichen Bereich zuordnet und diesen Satz an Positionssignaturen für den örtlichen Bereich abspeichert.

5. Heimautomatisierungssystem nach einem der vorangehenden Ansprüche,
**dadurch gekennzeichnet,**
- **dass** die Auswerteeinrichtung aus den Empfangsinformationen für einen Sender eine aktuelle Signatur erfasst und die aktuelle Signatur mit zumindest zwei Positionssignaturen vergleicht.

6. Heimautomatisierungssystem nach einem der vorangehenden Ansprüche,
**dadurch gekennzeichnet,**
- **dass** für einen Vergleich die Auswerteeinrichtung aus den Empfangsinformationen zunächst diejenigen Empfangsinformationen selektiert, die einem Sender zuzuordnen sind, wobei die Auswerteeinrichtung hierzu die Senderkennung der jeweiligen Empfangsinformationen auswertet und/oder
- **dass** die Auswerteeinrichtung aus den selektierten Empfangsinformationen die aktuelle Signatur erfasst und mit zumindest zwei Positionssignaturen vergleicht und/oder
- **dass** die Auswerteeinrichtung die aktuelle Signatur mit zumindest jeweils einer Positionssignatur eines örtlichen Bereichs vergleicht und für zumindest zwei örtliche Bereiche die Differenzbeträge zwischen der aktuellen Signatur und den Positionssignaturen ermittelt.

7. Heimautomatisierungssystem nach einem der vorangehenden Ansprüche,
**dadurch gekennzeichnet,**
- **dass** die Auswerteeinrichtung den kleinsten Differenzbetrag zwischen aktueller Signatur und Sätzen von Positionssignaturen ermittelt und den Sender dem örtlichen Bereich zuordnet, bei dessen Satz an Positionssignaturen der kleinste Differenzbetrag ermittelt wurde.

8. Heimautomatisierungssystem nach einem der vorangehenden Ansprüche,
**dadurch gekennzeichnet,**
- **dass** die Auswerteeinrichtung als Teil eines Sensors oder als von einem Sensor getrennte Einrichtung innerhalb des Heimautomatisierungssystems gebildet ist.

9. Heimautomatisierungssystem nach einem der vorangehenden Ansprüche,
**dadurch gekennzeichnet,**
- **dass** die Sensoren ortsfest in dem Heimautomatisierungssystem eingebunden sind und/oder dass der Sender ein mobiler, vorzugsweise energetisch eigengespeister Sender ist und/oder
- **dass** die Sensoren und/oder die Sender mit einer Trägerfrequenz von 868 Mhz Senden und/oder Empfangen.

10. Heimautomatisierungssystem nach einem der vorangehenden Ansprüche,
**dadurch gekennzeichnet,**
- **dass** die Sender ihre Senderkennung in festgelegten Intervallen aussenden.

11. Heimautomatisierungssystem nach einem der vorangehenden Ansprüche,
**dadurch gekennzeichnet,**
- **dass** die Auswerteeinrichtung die Intervalle erfasst und abhängig von den Intervallen die Sensoren zum Empfangen von Empfangsinformationen aktiviert sind und/oder dass die Auswerteeinrichtung Informationen zu Empfangsintervallen und/oder Empfangszeiten der Sensoren an die Sender übermittelt und die Sender abhängig von den empfangenen Informationen ihre Senderkennung aussenden.

12. Heimautomatisierungssystem nach einem der vorangehenden Ansprüche,
**dadurch gekennzeichnet,**
- **dass** die Auswerteeinrichtung abhängig von einer vorhergehenden Bestimmung des örtlichen Bereichs eines Senders eine Auswahl an Sensoren aktiviert und/oder dass die Auswerteeinrichtung abhängig von einem Gradienten von zumindest zwei vorhergehenden Bestimmungen des örtlichen Bereichs eines Senders eine Auswahl an Sensoren aktiviert.

13. Heimautomatisierungssystem nach einem der vorangehenden Ansprüche,
**dadurch gekennzeichnet,**
- **dass** ein Sender zumindest ein Bedienelement hat, dass dem Bedienelement innerhalb des Heimautomatisierungssystems zumindest eine Funktion zugeordnet ist und dass die zugeordnete Funktion abhängig von der Bestimmung des örtlichen Bereichs eines Senders ist und/oder
- **dass** Sender zumindest ein Bedienelement hat, dass dem Bedienelement innerhalb des Heimautomatisierungssystems zumindest eine Funktion zugeordnet ist und dass die zugeordnete Funktion jeweils an dem Aktor ausgeführt wir, welcher dem bestimmten örtlichen Bereichs eines Senders zugeordnet ist.

14. Verfahren zum Betreiben eines Heimautomatisierungssystems, insbesondere nach einem der vorangehenden Ansprüche bei dem,
- von zumindest zwei Sensoren ein Empfangssignal zumindest eines Senders empfangen,
- aus dem Empfangssignal eines Senders eine jeweilige Empfangsfeldstärke zusammen mit einer Senderkennung und einer Sensorkennung als Empfangsinformationen erfasst wird, und
- die Empfangsinformationen ausgewertet werden, aus den Empfangsinformationen eine aktuelle Signatur erstellt wird und abhängig von dem dem Sender der aktuellen Signatur zugeordneten örtlichen Bereich ein Steuerungstelegramm für einen Aktor des Heimautomatisierungssystems erstellt wird.

15. Auswerteeinrichtung eines Heimautomatisierungssystems umfassend,
- Empfangsmittel eingerichtet zum Empfangen von Empfangssignalen von zumindest zwei Sensoren,
- Auswertemittel eingerichtet zum Extrahieren einer jeweiligen Empfangsfeldstärke zusammen mit einer Senderkennung und einer Sensorkennung als aktuelle Signatur aus zumindest zwei Empfangssignalen eines Senders,
- Zuordnungsmittel zum Zuordnen einer aktuellen Signatur zu einem örtlichen Bereich und zum Speichern dieser Zuordnung als Positionssignatur, wobei die Auswerteeinrichtung dazu eingerichtet ist, aus den Empfangsinformationen eine aktuelle Signatur zu erstellen und abhängig von dem dem Sender der aktuellen Signatur zugeordneten örtlichen Bereich ein Steuerungstelegramm für einen Aktor des Heimautomatisierungssystems zu erstellen.

## Claims

1. Home automation system comprising,
- at least two sensors (A-M),
- at least one evaluation device (4),
- wherein the sensors are arranged to detect from a received signal of a transmitter (6) a respective received field strength (14) together with a transmitter identifier (10) and a sensor identifier (12) as reception information (8),
- wherein the sensors (A-M) are arranged to transmit the reception information (8) to the evaluation device (4) and
- the evaluation device (4) is arranged to evaluate the reception information (8), to generate a current signature from the reception information (8) and to generate a control telegram for an actuator of the home automation system as a function of the local area (2a-f) assigned to the transmitter of the current signature.

2. Home automation system according to claim 1,
**characterized in that**
- the evaluation device detects the respective received field strengths and sensor identifiers as current signatures for one transmitter respectively from the reception information of at least two sensors, and/or
- in a learning process, the evaluation device assigns at least one current signature as a position signature to a local area, in particular a room, and **in that** this assignment is stored.

3. Home automation system according to one of the preceding claims,
**characterized in that**
- a set of received field strength and respective sensor identification of at least two sensors is stored as a position signature.

4. Home automation system according to one of the preceding claims,
**characterized in that**
- in the evaluation device, a plurality of current signatures are assigned as position signatures to a same local area and this set of position signatures is stored for the local area.

5. Home automation system according to one of the preceding claims,
**characterized in that**
- the evaluation device detects a current signature from the reception information for a transmitter and compares the current signature with at least two position signatures.

6. Home automation system according to one of the preceding claims,
**characterized in that**
- for a comparison, the evaluation device first selects from the reception information those reception information which is to be assigned to a transmitter, where evaluation device evaluates for this purpose the transmitter identification of the respective reception information and/or
- the evaluation device obtains the current signature from the selected reception information and compares it with at least two position signatures, and/or
- the evaluation device compares the current signature with at least one position signature of a local area respectively and determines the difference amounts between the current signature and the position signatures for at least two local areas.

7. Home automation system according to one of the preceding claims,
**characterized in that**
- the evaluation device determines the smallest difference amount between the current signature and sets of position signatures and assigns the transmitter to the local area for whose set of position signatures the smallest difference amount was determined.

8. Home automation system according to one of the preceding claims,
**characterized in that**
- the evaluation device is formed as part of a sensor or as a device separated from a sensor within the home automation system.

9. Home automation system according to one of the preceding claims,
**characterized in that**
- the sensors are spatially fixed within the home automation system and/or **in that** the transmitter is a mobile transmitter, preferably energetically self-fed, and/or
- the sensors and/or the transmitters transmit and/or receive at a carrier frequency of 868 Mhz.

10. Home automation system according to one of the preceding claims,
**characterized in that**
- the transmitters transmit their transmitter identification at fixed intervals.

11. Home automation system according to one of the preceding claims,
**characterized in that**
- the evaluation device detects the intervals and the sensors are activated to receive reception information as a function of the intervals and/or **in that** the evaluation device transmits information on reception intervals and/or reception times of the sensors to the transmitters and the transmitters transmit their transmitter identification as a function of the reception information.

12. Home automation system based on one of the preceding claims,
**characterized in that**
- the evaluation device activates a selection of sensors as a function of a preceding determination of the local region of a transmitter and/or **in that** the evaluation device activates a selection of sensors as a function of a gradient of at least two preceding determinations of the local region of a transmitter.

13. Home automation system according to one of the preceding claims,
**characterized in that**
- a transmitter has at least one operating element, **in that** at least one function is assigned to the operating element within the home automation system, and **in that** the assigned function is dependent on the determination of the local area of a transmitter, and/or **in that** the assigned function is dependent on the determination of the local area of a transmitter,
- transmitter has at least one operating element, **in that** at least one function is assigned to the operating element within the home automation system, and **in that** the assigned function is in each case performed on the actuator which is assigned to the specific local area of a transmitter.

14. Method for operating a home automation system, in particular according to one of the preceding claims in which,
- a reception signal of at least one transmitter from at least two sensors is received,
- from the reception signal of a transmitter a respective received field strength is detected together with a transmitter identification and a sensor identification as reception information, and
- the reception information is evaluated, a current signature is generated from the reception information, and a control telegram for an actuator of the home automation system is generated as a function of the local area assigned to the transmitter of the current signature.

15. Evaluation device of a home automation system, comprising
- receiving means arranged to receive received signals from at least two sensors,
- evaluation means arranged to extract a respective received field strength together with a transmitter identifier and a sensor identifier as a current signature from at least two received signals of a transmitter,
- assignment means for assigning a current signature to a local area and for storing this assignment as a position signature, the evaluation device being arranged to generate a current signature from the reception information and to generate a control telegram for an actuator of the home automation system as a function of the local area assigned to the transmitter of the current signature.

## Revendications

1. Système domotique comprenant :
- au moins deux capteurs (A-M),
- au moins un dispositif d'exploitation (4),
- où les capteurs sont disposés pour détecter comme des informations de réception (8) provenant d'un signal de réception d'un émetteur (6), une intensité respective (14) du champ de réception, ainsi qu'une identification (10) de l'émetteur et une identification (12) des capteurs,
- où les capteurs (A-M) sont disposés pour transmettre les informations de réception (8) au dispositif d'exploitation (4) et
- où le dispositif d'exploitation (4) est agencé pour exploiter les informations de réception (8), pour délivrer une signature en vigueur à partir des informations de réception (8) et, en fonction de la zone locale (2a-f) affectée à l'émetteur de la signature en vigueur, pour élaborer un télégramme de commande pour un actionneur du système domotique.

2. Système domotique selon la revendication 1,
**caractérisé**
- **en ce que** le dispositif d'exploitation, prévu à chaque fois pour un émetteur, détecte comme signature en vigueur, à partir des informations de réception au moins de deux capteurs, les intensités respectives du champ de réception et les identifications respectives des capteurs, et/ou
- **en ce que** le dispositif d'exploitation, dans un processus d'apprentissage, affecte à une zone locale, en particulier à un espace, au moins une signature en vigueur considérée comme une signature de position, et en ce que cette affectation est stockée en mémoire.

3. Système domotique selon l'une des revendications précédentes,
**caractérisé**
- **en ce qu'**un enregistrement de l'intensité du champ de réception et de l'identification respective au moins de deux capteurs est stocké en mémoire comme signature de position.

4. Système domotique selon l'une quelconque des revendications précédentes,
**caractérisé**
- **en ce que** le dispositif d'exploitation affecte à une même zone locale une pluralité de signatures en vigueur considérées comme des signatures de position, et ledit dispositif d'exploitation stocke en mémoire cet enregistrement de signatures de position pour la zone locale.

5. Système domotique selon l'une quelconque des revendications précédentes,
**caractérisé**
- **en ce que** le dispositif d'exploitation, à partir des informations de réception pour un émetteur, détecte une signature en vigueur et compare la signature en vigueur à au moins deux signatures de position.

6. Système domotique selon l'une quelconque des revendications précédentes,
**caractérisé**
- **en ce que**, pour une comparaison, le dispositif d'exploitation sélectionne parmi les informations de réception, d'abord les informations de réception qui sont à affecter à un émetteur, où le dispositif d'exploitation, pour procéder à cette affectation, exploite l'identification de l'émetteur des informations de réception respectives et/ou
- **en ce que** le dispositif d'exploitation détecte la signature en vigueur parmi les informations de réception sélectionnées et compare ladite signature en vigueur à au moins deux signatures de position et/ou
- **en ce que** le dispositif d'exploitation compare à chaque fois la signature en vigueur à au moins une signature de position d'une zone locale et, pour au moins deux zones locales, ledit dispositif d'exploitation détermine les montants différentiels existant entre la signature en vigueur et les signatures de position.

7. Système domotique selon l'une quelconque des revendications précédentes,
**caractérisé**
- **en ce que** le dispositif d'exploitation détermine le plus petit montant différentiel existant entre une signature en vigueur et des enregistrements de signatures de position, et le dispositif d'exploitation affecte l'émetteur à la zone locale, zone d'enregistrement de signatures de position dans laquelle le plus petit montant différentiel a été déterminé.

8. Système domotique selon l'une quelconque des revendications précédentes,
**caractérisé**
- **en ce que** le dispositif d'exploitation est formé comme une partie d'un capteur ou bien comme un dispositif situé à l'intérieur du système domotique, ledit dispositif d'exploitation étant séparé par un capteur.

9. Système domotique selon l'une quelconque des revendications précédentes,
**caractérisé**
- **en ce que** les capteurs sont intégrés fixement dans le système domotique et/ou en ce que l'émetteur est un émetteur mobile, de préférence énergétiquement auto-alimenté et/ou
- **en ce que** les capteurs et/ou les émetteurs émettent et/ou reçoivent à une fréquence porteuse de 868 MHz.

10. Système domotique selon l'une quelconque des revendications précédentes,
**caractérisé**
- **en ce que** les émetteurs envoient leur identification d'émetteur à intervalles fixes.

11. Système domotique selon l'une quelconque des revendications précédentes,
**caractérisé**
- **en ce que** le dispositif d'exploitation détecte les intervalles et, en fonction des intervalles, les capteurs servant à la réception d'informations de réception sont activés et/ou en ce que le dispositif d'exploitation transmet des informations aux émetteurs, lesdites informations étant transmises à des intervalles de réception et/ou à des temps de réception des capteurs, et les émetteurs envoient leur identification d'émetteur en fonction des informations reçues.

12. Système domotique selon l'une quelconque des revendications précédentes,
**caractérisé**
- **en ce que** le dispositif d'exploitation active une sélection de capteurs en fonction d'une détermination précédente de la zone locale d'un émetteur et/ou en ce que le dispositif d'exploitation active une sélection de capteurs en fonction d'un gradient au moins de deux déterminations précédentes de la zone locale d'un émetteur.

13. Système domotique selon l'une quelconque des revendications précédentes,
**caractérisé**
- **en ce qu'**un émetteur a au moins un élément de commande, en ce qu'au moins une fonction est affectée à l'élément de commande disposé à l'intérieur du système domotique, et en ce que la fonction affectée est dépendante de la détermination de la zone locale d'un émetteur et/ou
- **en ce qu'**un émetteur a au moins un élément de commande, en ce qu'au moins une fonction est affectée à l'élément de commande disposé à l'intérieur du système domotique, et en ce que la fonction affectée est exécutée à chaque fois au niveau de l'actionneur qui est affecté à la zone locale déterminée d'un émetteur.

14. Procédé de fonctionnement d'un système domotique, en particulier selon l'une quelconque des revendications précédentes, procédé de fonctionnement dans lequel :
- un signal de réception au moins d'un émetteur est reçu par au moins deux capteurs,
- une intensité respective du champ de réception, ainsi qu'une identification de l'émetteur et une identification des capteurs sont détectées comme des informations de réception provenant du signal de réception d'un émetteur, et
- les informations de réception sont exploitées, une signature en vigueur étant délivrée à partir des informations de réception, et un télégramme de commande pour un actionneur du système domotique est élaboré en fonction de la zone locale affectée à l'émetteur de la signature en vigueur.

15. Dispositif d'exploitation d'un système domotique, ledit dispositif d'exploitation comprenant :
- des moyens de réception disposés pour recevoir des signaux de réception provenant au moins de deux capteurs,
- des moyens d'exploitation disposés pour l'extraction d'une intensité respective du champ de réception, ainsi que d'une identification de l'émetteur et d'une identification des capteurs, comme signature en vigueur délivrée à partir au moins de deux signaux de réception d'un émetteur,
- des moyens d'affectation servant à l'affectation d'une signature en vigueur pour une zone locale et servant au stockage en mémoire de cette affectation comme signature de position, où le dispositif d'exploitation est agencé pour délivrer, à partir des informations de réception, une signature en vigueur, et pour élaborer un télégramme de commande pour un actionneur du système domotique, ledit télégramme de commande étant élaboré en fonction de la zone locale affectée à l'émetteur de la signature en vigueur.
